# EUROPÄISCHE PATENTSCHRIFT

(11) **EP 0 653 631 B1**
(45) Veröffentlichungstag und Bekanntmachung des Hinweises auf die Patenterteilung: **14.05.2003**
(21) Anmeldenummer: 94810630.7
(22) Anmeldetag: 02.11.1994
(51) Int. Cl.: G01N 27/447

(54) **Vorrichtung und Verfahren zur elektrophoretischen Trennung von fluiden Substanzgemischen**
Apparatus and method for the electrophoretical separation of mixtures of fluid substances
Appareil et procédé pour la séparation électrophorétique de mélanges fluides de substances

(30) Priorität: 11.11.1993 CH 339293
(43) Veröffentlichungstag der Anmeldung: 17.05.1995
(73) Patentinhaber: Aclara BioSciences, Inc., Hayward, CA 94545 (US)
(72) Erfinder: Manz, Andreas, Dr., CH-4126 Bettingen (CH); Effenhauser, Carlo S., Dr., D-79756 Weil am Rhein (DE)
(74) Vertreter: Hallybone, Huw George

(56) Entgegenhaltungen:
- EP-A- 0 544 969
- WO-A-93/17771
- US-A- 4 908 112
- ANALYTICAL CHEMISTRY, Bd. 65, Nr. 19, 1.Oktober 1993 WASHINGTON, DC, US, Seiten 2637-2642, XP 000413548 C. S. EFFENHAUSER 'GLASS CHIPS FOR HIGH SPEED CAPILLARY ELECTROPHORESIS SEPARATIONS WITH SUBMICROMETER PLATE HEIGHTS'
- HRC JOURNAL OF HIGH RESOLUTION CHROMATOGRAPHY, Bd. 16, Nr. 10, 31.Oktober 1993 HEIDELBERG, DE, Seiten 594-596, XP 000416664 N. BURGGRAF 'SYNCHRONIZED CYCLIC CAPILLARY ELECTROPHORESIS- A NOVEL APPROACH TO ION SEPARATIONS IN SOLUTION.'
- ANALYTICAL CHEMISTRY, Bd. 65, Nr. 11, 1.Juni 1993 WASHINGTON, DC, US, Seiten 1576-1581, XP 000361718 A. V. LEEMO 'TRANSVERSE FLOW GATING INTERFACE FOR THE COUPLING OF MICROCOLUMN LC WITH CZE IN A COMPREHENSIVE TWO-DIMENSIONAL SYSTEM'

## Beschreibung

Die Erfindung betrifft eine Vorrichtung und ein Verfahren zur elektrophoretischen Trennung von fluiden Substanzgemischen gemäss Oberbegriff des Patentanspruchs 1 bzw. gemäss Oberbegriff des Patentanspruchs 19.

Elektrophoretische Trennmethoden beruhen auf der unterschiedlichen Migrationsgeschwindigkeit der einzelnen Komponenten einer zu untersuchenden Probe in einem Trägermedium bei angelegtem elektrischem Feld. Sehr weit verbreitet ist die Kapillarelektrophorese, bei der ein Trägermedium und eine zu untersuchende Probe in einem Kapillarensystem transportiert werden, welches eine kapillare Trennstrecke umfasst, zwischen deren Enden das elektrische Feld angelegt wird. Der Transport des Trägermediums im Kapillarensystem und die Injektion der zu untersuchenden Probe in das Trägermedium kann mit Hilfe von Pumpen und Ventilen oder mit elektrischen Feldern erfolgen, die in verschiedenen Abschnitten des Kapillarensystems entsprechend angelegt werden. Die einzelnen Komponenten der in das Trägermedium injizierten Probe wandern unterschiedlich schnell in dem elektrischen Feld der Trennstrecke, wodurch die Probe aufgetrennt wird. Die einzelnen Komponenten können mit Hilfe eines an die kapillare Trennstrecke angeschlossenen Detektors festgestellt werden. Für die gleichzeitige Analyse verschiedener Proben sind auch schon Trennanordnungen mit mehreren parallelen Kapillaren vorgeschlagen worden (Anal. Chem. 1992, 64, 967-972).

In der DNA-Sequenzierung werden beispielsweise gel-gefüllte Kapillaren als Trennstrecke eingesetzt. Bei diesem Trennverfahren erfolgt kein Transport des Trägermediums, des Gels, sondern es wandert nur die in deas Gel injizierte Probe im angelegten elektrischen Feld. Eine typische Trennleistung (welche auch theoretische Trennstufenzahl genannt wird) eines elektrophoretischen Trennsystems mit derartigen gel-gefüllten Kapillaren beträgt beispielsweise etwa 250 "Peaks" in einer Zeit von 30 Minuten.

In der US-A-4,908,112 wird vorgeschlagen, verzweigte Kapillarsysteme inclusive Trennstrecke zu miniaturisieren. Dabei ist das Kapillarensystem auf einem Halbleiterchip angeordnet. Der Transport des Trägermediums und die Injektion der zu trennenden Probe erfolgt mit Hilfe von zwischen einzelnen Streckenabschnitten des Kapillarensystems schaltbaren elektrischen Feldern. Die Abmessungen des Kanalsystems sind sehr klein, die erzielbaren Feldstärken hingegen sind sehr gross. Auf diese Weise kommt man mit sehr kleinen Mengen an Trägermedium und mit sehr kleinen Probenvolumina aus. Zudem ist das Trennverfahren bei den angelegten grossen Spannungen, typischerweise etwa 30 kV, sehr schnell durchführbar.

Eine weitere sehr verbreitete elektrophoretische Trennmethode stellt die Gel-Elektrophorese dar. Diese Trennmethode, bei der die Trennung der Probe in ihre Bestandteile nicht in Lösung sondern in einem stationären Trägermaterial, einem Gel, erfolgt, wird auch als Elektropherographie bezeichnet. Bei dem elektropherographischen Verfahren wird die zu trennende Probe vorzugsweise in der Mitte eines mit Puffer getränkten Trägermaterials (Pherogramm) strichförmig aufgetragen und an den Enden des Trägermaterials eine elektrische Spannung angelegt. Je nach Wanderungsrichtung und Wanderungsgeschwindigkeit der einzelnen Komponenten wird die Probe getrennt. Dabei wandern die verschieden geladenen Komponenten zu den jeweils entgegengesetzt geladenen Polen hin, während die neutralen an der Auftragstelle verbleiben. Bei einem kontinuierlichen Trennverfahren fliesst durch eine vertikale Platte von Tragermaterial eine Pufferlösung. Die Probe wird möglichst am oberen Ende der Platte zugegeben. Die elektrophoretische Trennung wird durch ein senkrecht zum Pufferfluss angelegtes elektrisches Feld hervorgerufen.

Die Gel-Elektrophorese ist eine etablierte Trennmethode für geladene Biopolymere. Häufig werden Polyacrylamid-Gele (PAGE) für die Trennung verwendet. Die Porengrösse der Polyacrylamid-Gele erlaubt eine Trennung nach Ladung und sterischer Hinderung der Probe-Moleküle im Gel. Bei Zugabe von Natrium-Dodecylsulfat (SDS für Sodium-Dodecyl-Sulfat) erhält man eine gute Korrelation der Migrationsdistanz der aufgetrennten Probenmoleküle mit der entsprechenden Molmasse, die aber unabhängig von der Ladung der Moleküle ist. Eine isoelektrische Fokussierung (IEF bzw. IF) als Vorstufe zur SDS-PAGE-Gel-Elektrophorese ermöglicht auch die Auftrennung vieler extrem komplexer Substanzgemische.

Eine mittlerweise etablierte Weiterentwicklung der Gel-Elektrophorese stellt die sogenannte 2D-Gel-Elektrophorese dar, bei der eine Probe nach unterschiedlichen Gesichtspunkten in zwei Dimensionen (2D) aufgetrennt wird. Eine derartige 2D-Gel-Elektrophorese Trennanordnung ist beispielsweise in "A.T. Andrews, Electrophoresis, Theory, Techniques and Biochemical and Clinical Applications, Clarendon Press, Oxford 1986, Seiten 223-230" beschrieben. Diese 2-dimensionale Trennmethode wird vor allem als Kombination von Isoelektrischem Fokussieren in der ersten Dimension und einer Gel-Elektrophorese, beispielsweise einer SDS-PAGE-Gel-Elektrophorese, in der zweiten Dimension benützt. Das resultierende Gel-Pattern gibt in der ersten Dimension Aufschluss über den isolelektrischen Punkt der jeweiligen Komponente und in der zweiten Dimension über die Molmasse der betreffenden Komponente. Die typische Trennleistung bei der 2D-Gel-Elektrophorese liegt bei einer Peak-Kapazität von etwa 10,000 in einer Zeit von mehr als zwei Stunden.

Zwar sind mit der 2D-Gel-Elektrophorese sehr hohe Trennleistungen erzielbar, jedoch ist an dieser Methode nachteilig, dass sie sehr langsam ist. Zunächst muss die Probe auf einem ersten Gel in der ersten Dimension aufgetrennt werden. Darauf folgt ein üblicherweise mühsames Zusammenfügen des ersten mit einem zweiten Gel, in dem die Trennung in der zweiten Dimension erfolgen soll. Bedingt durch die lange Analysezeit kommt es im freien Gel zur Diffusion der aufgetrennten Komponenten, was zu einer unerwünschten Bandenverbreiterung führen kann. Die für die Auftrennung im Gel erforderliche elektrische Spannung kann nur beschränkt erhöht werden, typischerweise liegt sie bei etwa 2 kV. Bei höheren Spannungen wird Joulsche Wärme erzeugt, welche zur Zersetzung der des Gels und der Probe führen kann.

Es besteht daher keine Möglichkeit, die erforderlichen langen Analysezeiten zu verringern, ohne dabei gleichzeitig an Auflösung (Trennleistung) zu verlieren. Die sehr langen Analysezeiten sind daher ein entscheidendes Hemmnis für den Einsatz der 2D-Gel-Elektrophorese für die Trennung von hochkomplexen Substanzgemischen.

Bei der Kapillarelektrophorese kann die Analysezeit durch erhöhte Spannung zwischen den Enden der Trennstrecke deutlich verringert werden. Bei miniaturisierten Kapillarelektrophoresesystemen auf Microchip-Basis werden Spannungen von typischerweise etwa 5-40 kV eingesetzt; daraus resultieren Analysezeiten von weniger als einer Minute. Allerdings können mit Hilfe der Kapillarelektrophorese nur relativ einfache Substanzgemische getrennt werden. Eine Kopplung vieler Trennkapillaren nebeneinander zur Erreichung einer "Zweidimensionalität", um auch hochkomplexe Substanzgemische auftrennen zu können, würde bei miniaturisierten Systemen hingegen Verbindungsstücke mit sub-Nanoliter Volumina erfordern. Derartige Verbindungsstücke sind aber, falls überhaupt, nur sehr schwierig und teuer herstellbar. Im Falle sehr kurzer Kapillaren-Trennstrecken für sehr schnelle Trennungen ist der Störeinfluss der Totvolumina der Verbindungsstücke besonders gross. Daher müssten diese Totvolumina verschwindend klein gehalten werden, was praktisch unmöglich erscheint. Eine Ausbildung der Trennstrecke des miniaturisierten Kapillarelektrophoresesystems als flaches Bett, in Analogie zur 2D-Gel-Elektrophorese, würde die Diffusion der aufgetrennten Komponenten fördern und dadurch zu einer deutlichen Verschlechterung der Trennleistung führen.

Aufgabe der Erfindung ist es daher, eine Vorrichtung und ein Verfahren zur elektrophoretischen Trennung von, insbesondere komplexen, fluiden Substanzgemischen zu schaffen, die so leistungsfähig sind wie die 2D-Gel-Elektrophorese, und welche kurze Trenn- bzw. Analysezeiten erlauben.

Diese und noch weitere Aufgaben sowie die Nachteile der Vorrichtungen und Verfahren des Standes der Technik werden durch eine Vorrichtung und durch ein Verfahren gemäss Kennzeichen des Patentanspruchs 1 bzw. des Patentanspruchs 19 gelöst. Besonders bevorzugte Ausführungs- bzw. Verfahrensvarianten der Erfindung sind jeweils Gegenstand der abhängigen Patentansprüche.

Insbesondere wird durch die Erfindung eine Vorrichtung zur elektrophoretischen Trennung von komplexen fluiden Substanzgemischen geschaffen, die ein Kanalsystem für ein Trägermedium, eine Injektionsvorrichtung für die Injektion eines aufzutrennenden Substanzgemisches in das Trägermedium und eine Trennstrecke zur Auftrennung des Substanzgemisches in einem entlang der Trennstrecke angelegten elektrischen Feld umfasst. Flussabwärts der Injektionsvorrichtung für das aufzutrennende Substanzgemisch ist in einem Abstand davon eine zweite Trennstrecke zur weiteren Auftrennung des Substanzgemisches in einem entlang der zweiten Trennstrecke angelegten elektrischen Feld vorgesehen. Die zweite Trennstrecke ist gegenüber der ersten um einen Winkel geneigt angeordnet. Der Kreuzungsbereich der ersten und der zweiten Trennstrecke bildet eine zweite Injektionsvorrichtung für das teilweise aufgetrennte Substanzgemisch in ein zweites Trägermedium. Das fluide Substanzgemisch wird in der ersten Injektionsvorrichtung in das Trägermedium injiziert und anschliessend in dem elektrischen Feld, das entlang der ersten Trennstrecke angelegt wird, aufgetrennt. Danach wird das teilweise aufgetrennte Substanzgemisch flussabwärts der ersten Trennstrecke in das zweite Trägermedium injiziert und in dem entlang der zweiten Trennstrecke angelegten elektrischen Feld weiter in seine Komponenten aufgetrennt.

Die erfindungsgemässe Vorrichtung und das erfindungsgemässe Verfahren machen sich die Vorteile einer zweidimensionalen Auftrennung, wie sie aus der 2D-Gel-Elektrophorese bekannt ist, zunutze ohne dabei aber den Nachteil der sehr langen Trenn- bzw. Analysezeiten aufzuweisen. Der Vorteile der sehr guten Auftrennung auch kochkomplexer Substanzengemische wird verbunden mit den sehr kurzen Auftrenn- bzw. Analysezeiten, die insbesondere durch die miniaturisierten Kapillar-Elektrophoresesysteme ermöglicht werden. Durch die Erfindung wird ein zweidimensionales Kapillarelektrophoresesystem geschaffen, welches ohne Verbindungsstücke mit sub-Nanoliter Volumina auskommt. Das Verfahren erlaubt sehr schnelle Trennungen eines hochkomplexen Substanzengemisches, welche typischerweise unter einer Minute liegen. Die Trennleistungen sind deutlich höher als bei der konventionellen Kapillar-Elektrophorese. Wegen der kurzen Analysezeiten kann die Erfindung auch für eine quasi-kontinuierliche Analyse eingesetzt werden.

Vorzugsweise weisen die zwei Injektionsvorrichtungen für die Injektion des Substanzgemisches bzw. teilweise aufgetrennten Substanzgemisches Injektionsvolumina auf, welche geometrisch begrenzt sind. In einer bevorzugten Ausführungsvariante weist der Kreuzungsbereich der ersten Trennstrecke mit der zweiten Trennstrecke die Form eines Doppel-T Stücks aufweist, wobei die Balken der T-Stücke jeweils von der zweite Trennstrecke gebildet sind. Auf diese Weise ist die zweite Trennstrecke durchgehend ausgebildet, während die Einmündung der ersten Trennstrecke in die zweite und die Abzweigung von der zweiten Trennstrecke für den Abtransport des Gemisches aus erstem Trägermedium und aufzutrennendem Substanzengemisch entlang der Erstreckung der zweiten Trennstrecke gegeneinander versetzt angeordnet sind. Das teilweise aufgetrennte Substanzengemisch wird zur Injektion in das zweite Trägermedium zunächst schräg zur Transportrichtung in der ersten Trennstrecke transportiert. Danach wird es umgelenkt und vorzugsweise in einer zur ersten Trennstrecke parallelen Richtung zu einem Ausgang aus dem Kanalsystem transportiert. Die erste Injektionsvorrichtung ist völlig analog aufgebaut. Dort wird das noch ungetrennte Substanzengemisch zunächst schräg zur ersten Trennstrecke transportiert, sodann wieder in die erste Transportrichtung umgelenkt und schliesslich an einer Abzweigung stromabwärts der Einmündung in die erste Trennstrecke erneut umgelenkt und vorzugsweise parallel zu der ursprünglichen Transportrichtung zu einem Ausgang transportiert. Die Injektion erfolgt auf diese Weise pfropfenweise, wobei das injizierte Volumen jeweils vom Abstand der Einmündung von der zugehörigen Abzweigung und vom Querschnitt der ersten und zweiten Trennstrecken abhängig ist.

In einer bevorzugten Ausführungsvariante weisen die erste und die zweite Injektionsvorrichtung die Form eines Doppel-T Stücks auf, wobei die Balken der T Stücke der jeweils von der ersten bzw. von der zweiten Trennstrecke bzw. deren geradlinigen Verlängerungen gebildet sind.

In einer besonders bevorzugten Ausführungsform der Erfindung sind flussabwärts der ersten Injektionsvorrichtung weitere Trennstrecken zur weiteren Auftrennung des Substanzgemisches in einem entlang der jeweiligen Trennstrecke angelegten elektrischen Feld vorgesehen. Diese verlaufen gleichfalls schräg zu der ersten Trennstrecke und etwa parallel zueinander. Die Kreuzungsbereiche der weiteren Trennstrecken mit der ersten Trennstrecke bilden jeweils weitere Injektionsvorrichtungen, an denen das teilweise aufgetrennte Substanzgemisch in ein durch die weiteren Trennstrecken transportiertes zweites Trägermedium injiziert werden. Die Ausbildung der Injektionsvorrichtungen entspricht in diesem Fall vorzeigsweise der bereits zuvor geschilderten. Diese besonders bevorzugte Ausführungsvariante erlaubt einen besonders vielfältigen Einsatz der Vorrichtung. Insbesondere können verschiedene Komponenten des in der ersten Trennstrecke teilweise aufgetrennten Substanzengemisches in die flussabwärts hintereinander kreuzenden und parallel zueinander verlaufenden weiteren Trennstrecken injiziert werden und dort nach besonderen Gesichtspunkten weiter aufgetrennt werden. Beispielsweise können in den einzelnen weiteren Trennstrecken unterschiedliche Feldstärkeverteilungen herschen, ein Umstand der die weitere Auftrennung des Substanzengemisches entscheidend beeinflussen kann.

Vorzugsweise münden die Endstücke der weiteren Trennstrecken in ein gemeinsames Reservoir bzw. ein gemeinsames Auffangbehältnis für das zweite Trägermedium. Das Reservoir und das Auffangbehältnis weisen dabei vorzugsweise einen grösseren Querschnitt auf als die kapillarenförmigen Trennstrecken, um genügend Trägermedium für die Trennstrecken bereitzustellen bzw. einen Rückstau an zu verhindern. Vorzugsweise wird der Querschnitt der Zufuhr- bzw. Abfuhrkapillaren etwa 2- bis etwa 10'000-fach grösser gewählt als der Querschnitt der Trennstrecken. Dadurch ist auch mit zähflüssigeren Trägermedien ein störungsfreier Betrieb gewährleistet.

Eine besonders interessante Einsatzmöglichkeit für die erfindungsgemässe Trennvorrichtung besteht, wenn Mittel vorgesehen sind, welche es erlauben in dem zweiten Trägermedium im Reservoir bzw. im Auffangbehältnis einen pH-Gradienten einzustellen. Zu diesem Zweck werden als zweites Trägermedium beispielsweise Ampholyte eingesetzt. Elektroden erlauben es, ein elektrisches Feld im Ampholyten im Reservoir bzw. im Auffangbehältnis zu erzeugen. Die sauren und basischen Gruppen der Moleküle des Ampholyt richten sich im elektrischen Feld entsprechend aus, wandern und erzeugen auf diese Weise im Ampholyt einen temporären oder stabilen pH-Gradienten. Bei der derart modifizierten Vorrichtung wird jede weitere Trennstrecke von einem Trägermedium mit einem anderen pH-Wert durchströmt. Auf diese Weise kann das injizierte teilweise aufgetrennte Substanzgemisch in jeder Trennstrecke unter anderen Randbedingungen weiteraufgetrennt werden.

Um zu gewährleisten, dass die Trennung des Substanzengemisches in der ersten und in den weiteren Trennstrecken nach unterschiedlichen Gesichtspunkten erfolgt, wird das erste Trägermedium in der ersten Trennstrecke verschieden von dem in den weiteren Trennstrecken gewählt. Als Trägermedien werden vorzugsweise Elektrolytlösungen oder Gele gewählt. So kann beispielsweise in der ersten Trennstrecke eine isoelektrische Fokussierung des Substanzengemisches erfolgen (erste Dimension), während die eigentliche Auftrennung in die einzelnen Komponenten dann in den weiteren Trennstrecken erfolgt (zweite Dimension).

Die aufgetrennten Komponenten des Substanzengemisches werden vorzugsweise entweder zu einem bestimmten Zeitpunkt mit Hilfe einer Kamera optisch zweidimensional in zwei Ortskoordinaten detektiert oder mit einem linear scannenden optischen Detektor über Erfassung der Orts- und Zeitkoordinaten erfasst. Beide Detektionsverfahren sind gut integrierbar und mit digitalen Auswerteeinrichtungen kompatibel.

In einer ganz besonders bevorzugten Ausführungsvariante ist die erfindungsgemässe Trennvorrichtung miniaturisiert. Dabei sind das Kanalsystem, die Injektionsvorrichtungen, die Trennstrecken, die Zu- und Abfuhrkapillaren in einem Materialplättchen aus Glas, Polymerfilm oder einem halbleitenden Material, vorzugsweise einkristallinem Silizium, erstellt, welches wahlweise mit einem Deckel, vorzugsweise aus Glas abdeckbar sein kann. Im Deckel und/oder im Materialplättchen sind jeweils separate Zuleit- und Ableitöffnungen für das erste und zweite Trägermedium und für das aufzutrennende Substanzengemisch vorgesehen. Die Trennstrecken sind vorzugsweise als Gräben ausgebildet, deren Tiefe etwa 0.1 µm bis etwa 1000 µm beträgt, und deren Breite etwa 1 µm bis etwa 500 µm beträgt. Dabei ist der Kanal jeweils umso schmäler je tiefer er ist und umgekehrt. Die derart ausgebildete miniaturisierte Trennvorrichtung ist mit den üblichen mikromechanischen oder aus der Halbleiterfertigung bekannten Herstellungsmethoden im Massenverfahren herstellbar und daher relativ kostengünstig zu realisieren. Zudem besteht die Möglichkeit, diverse elektronische Elemente, beispielsweise Elektroden für den Transport des Trägermediums mit Hilfe von elektrischen Feldern usw. auf dem "Analysechip" zu integrieren.

In einer Ausbildungsvariante der Vorrichtung werden als Trägermedien vorzugsweise wässrige Elektrolyten verwendet. Diese haben den Vorteil, dass sie mit Hilfe von elektrischen feldern durch das Kanalsystem und die Trennstrecken transportiert werden können. Die dazu erforderlichen elektrischen Felder können beispielsweise über auf dem miniaturisierten Analysechip integrierte Elektroden vermittelt und gesteuert werden. Bei Kanälen und Trennstrecken mit entsprechend kleinen Querschnitten können diese auch ein- oder zweiseitig offen ausgebildet sein. Das Trägermedium und die Proben verbleiben in diesem Fall wegen der herrschenden Kapillarkräfte in den Kanälen bzw. den Trennstrecken.

Es können auch Gele als Trägermedien eingesetzt werden. Diese sind vorzugsweise stationär, das heisst in diesem Fall wird das Trägermedium nicht durch das Kanalsystem bzw. die Trennstrecken transportiert, sondern es wandert nur die Probe im Gel. In diesem Fall können das Kanalsystem und die Trennstrecken ein- zwei- oder sogar dreiseitig offen ausgebildet sein. Das gesamte Kanalsystem und die Trennstrecken können in dem Gel bzw. in den Gelen beispielsweise fotolithografisch, druck- oder prägetechnisch erstellt sein. Das Gel selbst bildet das Kanalsystem und die Trennstrecken - im Fall einer dreiseitig offenen Variante begrenzt nur das nichtleitende Trägermaterial für das Gel die Kanäle zusätzlich. Die Proben wandern in diesem Fall in den Gel-Kanälen ohne weitere Seitenführung.

Der Winkel unter dem die zweite(n) Trennstrecke(n) gegenüber der ersten geneigt ist (sind) beträgt etwa 30°-150° vorzugsweise etwa 90°. Dies erlaubt eine relativ grosse Flexibilität in der Gestaltung und Anordnung der Kanäle und Trennstrecken und die Zweidimensionalität des Trennvorgangs bleibt erhalten.

Vorzugsweise ist die Vorrichtung auch mit wenigstens einem Detektor für das in seine Komponenten aufgetrennte Substanzgemisch ausgestattet. Dies kann beispielsweise ein optischer oder eine auf elektrochemischer Basis funktionierender Detektor sein. Auf diese Weise kann die Vorrichtung für ganz bestimmt Analysen massgeschneidert sein, je nach Art des Detektors können beispielsweise ganz bestimmte Komponenten detketiert werden. Aufgrund der konzeptionsbedingten Miniaturisierbarkeit der Vorrichtung bieten sich vielfältige Einsatzmöglichkeiten beispielsweise in technologischen, wissenschaftlichen aber auch in medizinischen Anwendungsgebieten.

Im folgenden wird die erfindungsgemässe Vorrichtung mit allen ihr als wesentlich zugehörigen Details anhand von schematisch dargestellten beispielsweisen Ausführungsvarianten näher erläutert. Das erfindungsgemässe Verfahren wird gleichfalls unter Bezugnahme auf die Darstellungen im Prinzip erläutert. Es zeigen:
- Fig. 1: ein erstes Ausführungsbeispiel der Trennvorrichtung, und
- Fig. 2: ein zweites Ausführungsbeispiel der erfindungsgemässen Vorrichtung.

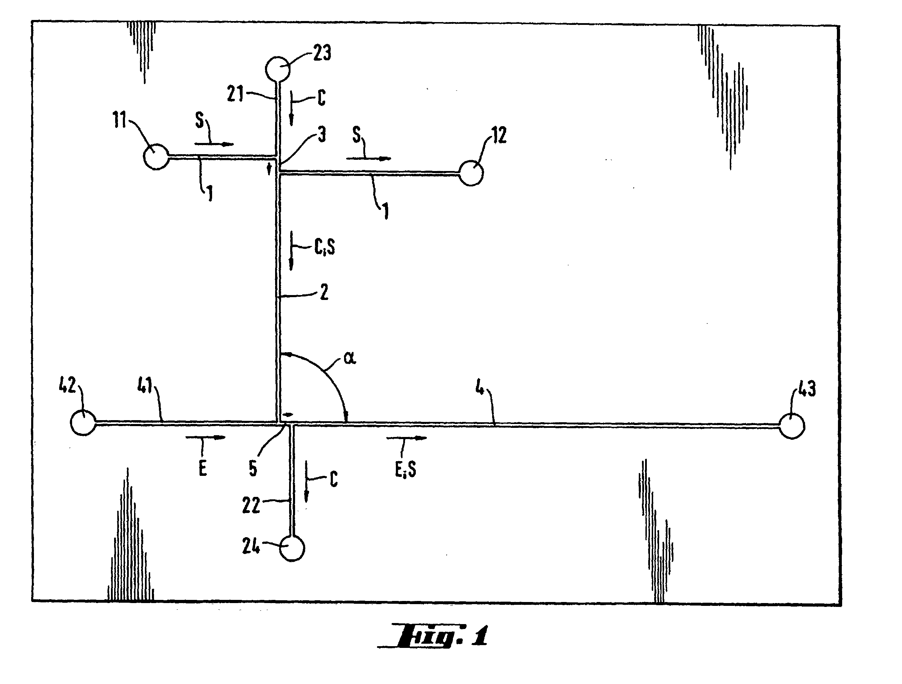

Das in Fig. 1 dargestellte Ausführungsbeispiel stellt das Grundprinzip der erfindungsgemässen Vorrichtung zur elektrophoretischen Trennung von, insbesondere hochkomplexen, fluiden Substanzgemischen dar. Die Vorrichtung umfasst ein Kapillarensystem für den Transport eines Trägermediums C und eines aufzutrennenden Substanzgemisches S, eine Injektionsvorrichtung 3 für die Injektion des aufzutrennenden Substanzgemisches S in das Trägermedium C und eine vorzugsweise kapillarenförmige Trennstrecke 2, welche Bestandteil des Kapillarensystems ist. Während seines Transports durch die Trennstrecke 2 wird das Substanzgemisch in einem entlang der Trennstrecke angelegten elektrischen Feld aufgetrennt. Auf eine Darstellung der Elektroden, über die das elektrische Feld entlang der Trennstrecke 2 erstellt wird, wurde aus Gründen der Übersichtlichkeit verzichtet. Das Trägermedium C und das Substanzgemisch S bzw. deren Strömungsrichtungen sind in der schematischen Darstellung durch entsprechend mit S bzw. C gekennzeichneten Pfeilen angedeutet. Die Enden der Kapillarenabschnitte 21 bzw. 22 münden in Zu- bzw. Abflüsse 23 bzw. 24, über die das fluide, vorzugsweise flüssige, Trägermedium C in das Kapillarensystem eingebracht und auch wieder abgeleitet werden kann. Entsprechend münden die Enden des Kapillarenabschnittes 1 in einen Einlass 11 bzw. einen Auslass 12 für das zu trennende Substanzgemisch S.

Der Kreuzungsbereich zwischen den Kapillarenabschnitten 1, über welche das Substanzgemisch S transportiert wird, und dem Kapillarenabschnitt 21,2,22, in dem das Trägermedium C transportiert wird, bildet die Injektionsvorrichtung 3 für das Substanzgemisch S in den Strom des Trägermediums C. Der Kreuzungsbereich kann als einfacher geradliniger Kreuzungsabschnitt ausgebildet sein, vorzugsweise jedoch ist er derart ausgebildet, dass die Injektionsvorrichtung 3 für die Injektion des aufzutrennenden Substanzgemisches S in das Trägermedium C ein geometrisch begrenztes Injektionsvolumen aufweist. Dazu besitzt der Kreuzungsbereich die Form eines Doppel-T Stücks, wobei die Balken der T Stücke jeweils von der ersten Trennstrecke 2 bzw. deren geradliniger Verlängerung 21 gebildet sind. Das Injektionsvolumen wird auf diese Weise durch den Abstand zwischen der Einmündung des Kanalabschnitts 1 in die Trennstrecke 2 und dessen beispielsweise stromabwärts angeordneter Austrittsmündung und den Querschnitt der Trennstrecke 2 festgelegt.

Erfindungsgemäss ist stromabwärts in einem Abstand von der Injektionsvorrichtung 3 eine zweite vorzugsweise kapillarenförmige Trennstrecke 4 angeordnet, die gegenüber der ersten um einen Winkel α geneigt angeordnet ist und im vorliegen Ausführungsbeispiel vorzugsweise etwa vertikal zu der ersten Trennstrecke 2 verläuft. Die zweite Trennstrecke 4 erstreckt in vorzugsweise geradliniger Verlängerung in ein Kapillarenstück 41. Die zweite Trennstrecke 4 und das Kapillarenstück 41 sind gleichfalls Bestandteil des Kapillarensystems der Vorrichtung. Die Enden des Kapillarenstückes 41 bzw. der zweiten Trennstrecke 4 münden in Einlass- bzw. Auslassöffnungen 42 bzw. 43, über die ein zweites fluides, vorzugsweise flüssiges, Trägermedium E in das Kapillarensystem eingebracht bzw. wieder aus diesem entfernt werden kann.

Der Kreuzungsbereich der ersten und der zweiten Trennstrecke 2,4 ist derart ausgebildet, dass er eine zweite Injektionsvorrichtung 5 für das teilweise aufgetrennte Substanzgemisch S in das entlang der zweiten Trennstrecke 4 transportierte zweite Trägermedium E bildet. Der Kreuzungsbereich kann als einfacher geradliniger Kreuzungsabschnitt ausgebildet sein, vorzugsweise jedoch ist er derart ausgebildet, dass die Injektionsvorrichtung 5 für die Injektion des teilweise aufgetrennten Substanzgemisches S in das zweite Trägermedium E ein geometrisch begrenztes Injektionsvolumen aufweist. Dazu besitzt der Kreuzungsbereich die Form eines Doppel-T Stücks, wobei die Balken der T Stücke jeweils von der zweiten Trennstrecke 4 bzw. deren geradliniger Verlängerung, dem Kapillarenstück 41 gebildet sind. Das Injektionsvolumen wird auf diese Weise durch den Abstand zwischen der Einmündung der ersten Trennstrecke 2 in die zweite Trennstrecke 4 und der beispielsweise stromabwärts angeordneten Mündung des Kapillarenabschnitts 22, der in den Abfluss 24 für das erste Trägermedium C führt, und den Querschnitt der zweiten Trennstrecke 4 festgelegt.

Das in der ersten Trennstrecke 2 teilweise aufgetrennte Substanzgemisch S wird an der zweiten Injektionsvorrichtung 5 in den Strom des zweiten Trägermediums E injiziert und in einem entlang der zweiten Trennstrecke 4 angelegten elektrischen Feld weiter in seine Komponenten aufgetrennt. Auf eine Darstellung der Elektroden, über die das elektrische Feld entlang der Trennstrecke 4 erstellt wird, wurde aus Gründen der Übersichtlichkeit verzichtet. Vorzugsweise ist das erste Trägermedium C vom zweiten E verschieden. Auf diese Weise können die erste und die zweite Trennung nach unterschiedlichen Gesichtspunkten erfolgen. Beispielsweise kann in der ersten Trennstrecke 2 zunächst eine isoelektrische Fokussierung des Substanzgemisches erfolgen, während die eigentliche Auftrennung in die einzelnen Komponenten in der nachgeschalteten zweiten Trennstrecke 4 erfolgt.

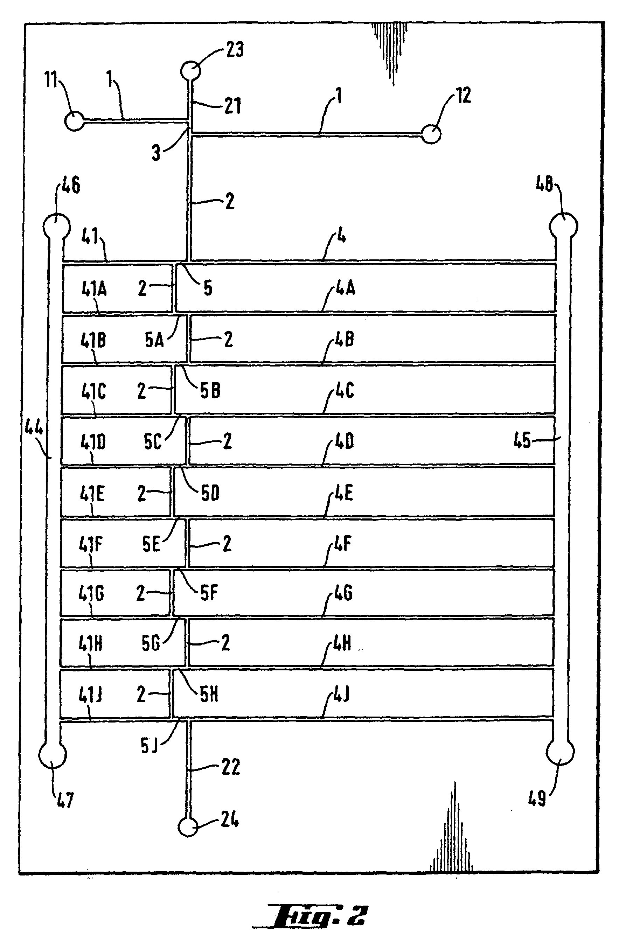

Bei dem in Fig. 2 dargestellten Ausführungsbeispiel der erfindungsgemässen Vorrichtung handelt es sich um eine Weiterentwicklung des Prinzipbeispiels aus Fig. 1. Im Anschluss an die erste Trennstrecke 2 ist stromabwärts eine Reihe weiterer Trennstrecken 4,4A-4J angeordnet. Die zusätzlichen Trennstrecken 4,4A-4J verlaufen alle etwa vertikal zu der ersten Trennstrecke 2 und etwa parallel zueinander. Die Kreuzungsbereiche der zusätzlichen Trennstrecken 4,4A-4J mit der ersten Trennstrecke 2 bilden Injektionsvorrichungen 5,5A-5J für das teilweise getrennte Substanzgemisch S. Wie anhand des prinzipiellen Ausführungsbeispiels erläutert, ist das Injektionsvolumen der Injektionsvorrichtungen 5,5A-5J vorzugsweise geometrisch begrenzt. Alle Kreuzungsbereiche besitzen daher vorzugsweise die Form von Doppel-T Stücken, wobei jeweils die Querbalken der T's von den jeweiligen zusätzlichen Trennstrecken 4,4A-4J bzw. deren geradlinigen Verlängerungen, den Kapillarstücken 41,41A-41J gebildet sind.

Die Enden der zusätzlichen Trennstrecken 4,4A-4J bzw. die Enden der Kapillarstücke 41,41A-41J münden in ein gemeinsames Reservoir 44 für das zweite Trägermedium E bzw. in ein gemeinsames Auffangbehältnis 45. Im speziellen Fall ist das gemeinsame Reservoir 44 als Zufuhrkapillare und das gemeinsame Auffangbehältnis 45 als Abfuhrkapillare ausgebildet. Die Kapillaren 44,45 weisen einen grösseren Querschnitt auf als die Trennstrecken 2 bzw. 4,4A-4J. Die beiden Enden der Zufuhrkapillare 44 sind mit Öffnungen 46 und 47 verbunden, über die das zweite Trägermedium in die Zufuhrkapillare 44 eingespeist wird. Die beiden Enden der Abfuhrkapillare 45 münden in Auslassöffnungen 48 und 49, über die das Trägermedium-Substanz-Gemisch E+S wieder aus der Abfuhrkapillare 45 abtransportiert wird. Das vor-aufgetrennte Substanzgemisch S wird in eine Vielzahl von parallel zueinander verlaufenden weiteren Trennstrecken 4,4A-4J injiziert und dort parallel weiteraufgetrennt. Durch geeignete Wahl des Injektionszeitpunktes können ganz bestimmte "Vorkomponenten" des Substanzgemisches aus der ersten Trennstrecke 2 in die weiteren 4,4A-4J injiziert werden und dort weiter getrennt werden. Auch besteht die Möglichkeit, die weitere Auftrennung in den einzelnen weiteren Trennstrecken 4,4A-4J in unterschiedlich starken elektrischen Feldern durchzuführen.

Das Ausführungsbeispiel der Erfindung gemäss Fig. 2 kann auch noch dahingehend modifiziert werden, dass das zweite Trägermedium E in der Zufuhr- bzw. in der Abfuhrkapillare 44,45 einen pH-Gradienten aufweist. Dabei wird darauf geachtet, dass das zweite Trägermedium in der Zufuhr- und in der Abfuhrkapillare den gleichen Gradientenverlauf des pH-Wertes aufweisen. Auf diese Weise kann jede der zusätzlichen Trennstrecken 4,4A-4J mit Trägermedium mit einem anderen pH-Wert versorgt werden. Die Auftrennung des vor-aufgetrennten Substanzgemisches erfolgt dann in jeder der zusätzlichen Trennstrecken 4,4A-4J in einem Trägermedium mit anderem pH-Wert, das heisst unter kontrollierbar unterschiedlichen Bedingungen.

Bei einer vereinfachten Variante des zweiten Ausführungsbeispiels findet keine Vor-Auftrennung des Substanzgemisches S statt, sondern dieses wird direkt über den Zufluss 23 anstelle eines ersten Trägermediums C in das Kapillarensystem eingespeist und an den Injektionsvorrichtungen 5,5A-5J in die weiteren Trennstrecken 4,4A-4J injiziert. Bei diesem vereinfachten Ausführungsbeispiel ohne Vor-Auftrennung kann auch auf den Kapillarenabschnitt 1, über den normalerweise das Substanzgemisch S in die erste Trennstrecke 2 eingebracht wird, entfallen.

Das Auslegungkonzept der erfindungsgemässen Vorrichtung erlaubt es auch, das Kapillarensystem, die Injektionsvorrichtungen 3,5,5A-5J, die Trennstrecken 2,4,4A-4J, die Zu- und Abfuhrkapillaren 44,45 in einem Materialplättchen aus Glas oder einem halbleitenden Material, vorzugsweise einkristallinem Silizium, zu erstellen. Dabei sind die Trennstrecken als Gräben ausgebildet, deren Breite etwa 1 µm bis etwa 500 µm beträgt, und deren Tiefe etwa 0,1 µm bis etwa 1000 µm beträgt. Das Materialplättchen ist an der Seite, die die Gräben aufweist, mit einem Deckel, vorzugsweise aus Glas abdeckbar. Im Deckel und/oder im Materialplättchen sind die Zuleit- bzw. Ableitöffnungen 23,24; 42,43; 46-48;11,12 für das erste und zweite Trägermedium C,E und für das aufzutrennende Substanzengemisch S vorgesehen. Vorzugsweise sind sie als Einstecköffnungen für Anschlusskapillaren ausgebildet.

Zur Erfassung der einzelnen Komponenten des aufgetrennten Substanzgemisches ist ein (in den Fig. nicht dargestellter) Detektor für das in seine Komponenten aufgetrennte Substanzgemisch vorgesehen. Der Detektor ist beispielsweise eine optische Kamera, mit deren Hilfe die aufgetrennten Komponenten zu einem bestimmten Zeitpunkt zweidimensional in zwei Ortskoordinaten detektiert werden. Alternativ dazu können die aufgetrennten Komponenten des Substanzgemisches S mit einem linear scannenden optischen Detektor über Erfassung der Orts- und Zeitkoordinaten erfasst werden.

Die erfindungsgemässe Vorrichtung und das erfindungsgemässe Verfahren erlauben eine zweidimensionale Elektrophorese von hochkomplexen Substanzgemischen in einem Kapillarelektrophoresesystem. Dabei werden hohe Trennleistungen erreicht, ohne die aus der 2D-Gel-Elektrophorese bekannten langen Trenn- bzw. Analysezeiten in Kauf nehmen zu müssen. Die Vorrichtung und das Verfahren sind vielfältig einsetzbar. Die Wahl der Trägermedien richtet sich nach dem aufzutrennenden Substanzgemisch. Es können geeignete Elektrolytlösungen oder Gele mit oder ohne pH-Gradienten eingesetzt werden. In "Journal of Chromatography Library - Vol.52, Capillary Electrophoresis, 1992 Elsevier Science Publishers B.V., Seiten 173-183" sind Beispiele für Gele angegeben, die auch zusammen mit der erfindungsgemässen Vorrichtung einsetzbar sind. Die miniaturisierte Ausführungsvariante erlaubt den Einsatz von mikromechanischen und aus der Halbleiterproduktion bekannten Massenfertigungstechniken. Dadurch kann die erfindungsgemässe Vorrichtung relativ kostengünstig in grossen Stückzahlen hergestellt werden. Die miniaturisierte Ausführungsvariante als "Analysechip" erlaubt zudem die on-chip Integration von elektrischen Komponenten, beispielsweise der Elektroden für die Felderzeugung in den Trennstrecken.

## Patentansprüche

1. Vorrichtung zur elektrophoretischen Trennung von komplexen fluiden Substanzgemischen umfassend ein Kanalsystem (21,2,22) für ein Trägermedium (C), eine Injektionsvorrichtung (3) fiir die Injektion eines aufzutrennenden Substanzgemisches (S) in das Trägermedium (C) und eine Trennstrecke (2) zur Auftrennung des Substanzgemisches (S) in einem elektrischen Feld, welches im Trägermedium (C) entlang der Trennstrecke (2) anlegbar ist, **dadurch gekennzeichnet, dass** zur weiteren Auftrennung des Substanzgemisches (S) wenigstens eine zweite Trennstrecke (4,4A-4J) mit einem zweiten Trägermedium (E) vorgesehen ist, in dem entlang der zweiten Trennstrecke (4,4A-4J) ein weiteres elektrisches Feld anlegbar ist, welche zweite Trennstrecke (4,4A-4J) gegenüber der ersten (2) um einen Winkel (α) geneigt angeordnet ist und in einem Abstand flussabwärts der Injektionsvorrichtung (3) für das aufzutrennende Substanzgemisch (S) derart verläuft, dass ein Kreuzungsbereich der ersten (2) und der zweiten Trennstrecke (4,4A-4J) eine zweite Injektionsvorrichtung (5,5A-5J) für das teilweise aufgetrennte Substanzgemisch (S) in das zweite Trägermedium (E) bildet, wobei die zweite Trennstrecke durchgehend ausgebildet ist, während die Einmündung der ersten Trennstrecke in die zweite und die Abzweigung von der zweiten Trennstrecke für den Abtransport des Gemisches aus erstem Trägermedium und aufzutrennendem Substanzgemisch entlang der Erstreckung der zweiten Trennstrecke gegeneinander versetzt angeordent sind.

2. Vorrichtung nach Anspruch 1, **dadurch gekennzeichnet, dass** das die zweite Injektionsvorrichtung (5,5A-5J) für die Injektion des teilweise aufgetrennten Substanzgemisches (S) ein Injektionsvolumen aufweist, welches geometrisch begrenzt ist.

3. Vorrichtung nach Anspruch 2, **dadurch gekennzeichnet, dass** der Kreuzungsbereich (5, 5A-5J) der ersten Trennstrecke (2) mit der zweiten Trennstrecke (4,4A-4J) die Form eines Doppel-T Stücks aufweist, wobei die Balken der T-Stücke jeweils von der zweite Trennstrecke (4,4A-4J) bzw. deren geradliniger Verlängerung (41,41A-41J) gebildet sind.

4. Vorrichtung nach einem der vorangehenden Ansprüche, **dadurch gekennzeichnet, dass** die erste Injektionsvorrichtung (3) für die Injektion des aufzutrennenden Substanzgemisches (S) in das erste Trägermedium (C) ein geometrisch begrenztes Injektionsvolumen aufweist.

5. Vorrichtung nach Anspruch 4, **dadurch gekennzeichnet, dass** die erste Injektionsvorrichtung (3) die Form eines Doppel-T Stücks aufweist, wobei die Balken der T Stücke jeweils von der ersten Trennstrecke (2) bzw. deren geradliniger Verlängerung (21) gebildet sind.

6. Vorrichtung nach einem der vorangehenden Ansprüche, **dadurch gekennzeichnet, dass** flussabwärts der ersten Injektionsvorrichtung (3) eine Anzahl weiterer Trennstrecken (4, 4A-4J) zur weiteren Auftrennung des Substanzgemisches (S) in einem entlang der jeweiligen Trennstrecke angelegten elektrischen Feld vorgesehen sind, die gegenüber der ersten Trennstrecke (2) um einen Winkel (α) geneigt und etwa parallel zueinander angeordnet sind, und deren Kreuzungsbereiche mit der ersten Trennstrecke (2) jeweils weitere Injektionsvorrichtungen (5,5A-5J) für das teilweise aufgetrennte Substanzgemisch (S) in ein zweites Trägermedium (E) bilden.

7. Vorrichtung nach Anspruch 6, **dadurch gekennzeichnet, dass** die Endstücke der weiteren Trennstrecken (4,4A-4J) in ein gemeinsames Reservoir (44) bzw. ein gemeinsames Auffangbehältnis (45) fiir das zweite Trägermedium (E) münden, welche vorzugsweise einen grösseren Querschnitt aufweisen als die Trennstrecken.

8. Vorrichtung nach Anspruch 7, **dadurch gekennzeichnet, dass** der Querschnitt des Reservoirs (44) bzw. des Auffangbehältnisses (45) etwa 2-10'000 mal grösser ist als der Querschnitt der Trennstrecken (4,4A-4J).

9. Vorrichtung nach Anspruch 7 oder 8, **dadurch gekennzeichnet, dass** das Reservoir (44) und das Auffangbehältnis (45) mit Mitteln ausgestattet sind, welche es erlauben in dem zweiten Trägermedium (E) einen pH-Gradienten einzustellen.

10. Vorrichtung nach einem der vorangehenden Ansprüche, **dadurch gekennzeichnet, dass** das erste und das zweite Trägermedium (C,E) unterschiedliche Medien sind.

11. Vorrichtung nach einem der vorangehenden Ansprüche, **dadurch gekennzeichnet, dass** das Kanalsystem (21,2,22), die Injektionsvorrichtungen (3,5,5A-5J), die Trennstrecken (2,4,4A-4J), ggf. das Reservoir (44) und das Auffangbehältnis (45) und allfällige weitere Verlängerungskanäle (41,41A-41J) in einem Materialplättchen aus Glas, einem Polymerfilm oder einem halbleitenden Material, vorzugsweise einkristallinem Silizium, erstellt sind, welches vorzugsweise mit einem Deckel, beispielsweise aus Glas abdeckbar ist, und dass jeweils separate Zuleit- und Ableitöffnungen (11,12,42,43;11,12,46-49) für das erste und zweite Trägermedium (C;E) und für das aufzutrennende Substanzengemisch (S) vorgesehen sind, welche Zuleit- bzw. Ableitöffnungen im Deckel und/oder im Materialplättchen angeordnet sind.

12. Vorrichtung nach Anspruch 12, **dadurch gekennzeichnet, dass** die Trennstrecken (2,4,4A-4J) als Gräben ausgebildet sind, deren Tiefe etwa 0.1 µm bis etwa 1000 µm beträgt, und deren Breite etwa 1 µm bis etwa 500 µm beträgt, wobei immer jeweils schmale Gräben eine grosse Tiefe besitzen und umgekehrt.

13. Vorrichtung nach einem der vorangehenden Ansprüche, **dadurch gekennzeichnet, dass** die Trägermedien (C,E) vorzugsweise wässrige Elektrolyten sind, welche mit Hilfe elektrischer Felder durch das Kanalsystem (21,2,22) und die Trennstrecken (2,4,4A-4J) transportiert werden.

14. Vorrichtung nach einem der Ansprüche 1-12, **dadurch gekennzeichnet, dass** die Trägermedien (C,E) stationäre Gele sind.

15. Vorrichtung nach einem der vorangehenden Ansprüche, **dadurch gekennzeichnet, dass** das Kanalsystem (21,2,22) und die Trennstrecken (2,4,4A-4J) ein- oder zweiseitig offen ausgebildet sind.

16. Vorrichtung nach Anspruch 14, **dadurch gekennzeichnet, dass** das Kanalsystem (21,2,22) die Trennstrecken (2,4,4A-4J) und allfällige Verlängerungskanäle (41,41A-41J) in den Gelen ausgebildet sind und dreiseitig offen sind.

17. Vorrichtung nach einem der vorangehenden Ansprüche, **dadurch gekennzeichnet, dass** der Winkel (α), unter dem die zweite (4) bzw. die weiteren (4,4A-4J) Trennstrecken gegenüber der ersten Trennstrecke (2) geneigt angeordnet sind, etwa 30°-150°, vorzugsweise etwa 90° beträgt.

18. Vorrichtung nach einem der vorangehenden Ansprüche, dadurch gekenzeichnet, dass ein Detektor für das in seine Komponenten aufgetrennte Substanzgemisch (S) vorgesehen ist.

19. Verfahren zur elektrophoretischen Trennung von komplexen fluiden Substanzgemischen entlang einer Trennstrecke, bei dem flussaufwärts der Trennstrecke (2) ein komplexes Substanzgemisch (S) in das Trägermedium (C) injiziert wird und anschliessend in einem elektrischen Feld, das entlang der Trennstrecke (2) angelegt wird, getrennt wird, **dadurch gekennzeichnet, dass** das teilweise aufgetrennte Substanzgemisch (S) flussabwärts der Trennstrecke (2) in ein zweites Trägermedium (E) injiziert wird, welches in wenigstens einer zweiten Trennstrecke (4;4,4A-4J) enthalten ist, die unter einem Winkel (α) gegenüber der ersten (2) geneigt verläuft, und dass das Substanzgemisch (S) in einem entlang der zweiten Trennstrecke in dem zweiten Trägermedium (E) herschenden elektrischen Feld weiter aufgetrennt wird, wobei die zweite Trennstrecke durchgehend ausgebildet ist, während die Einmündung der ersten Trennstrecke in die zweite und die Abzweigung von der zweiten Trennstrecke für den Abtransport des Gemisches aus erstem Trägermedium und aufzutrennendem Substanzgemisch entlang der Erstreckung der zweiten Trennstrecke gegeneinander versetzt angeordent sind.

20. Verfahren nach Anspruch 19, **dadurch gekennzeichnet, dass** die Injektion des Substanzgemisches (S) in das erste (C) bzw. in das zweite Trägermedium (E) mit Hilfe von Injektionsvorrichtungen (3,5,5A-5J) durchgeführt wird, deren Injektionsvolumina durch die Ausbildung der Kreuzungsbereiche der Trennstrecken (2,4,4A-4J) geometrisch definiert ist.

21. Verfahren nach Anspruch 20, **dadurch gekennzeichnet, dass** das Substanzgemisch (S) zur Injektion in das erste (C) bzw. in das zweite Trägermedium (E) entlang eines Doppel-T Stücks geführt wird, dessen Balken jeweils von der Trennstrecke (2,4,4A-4J) bzw. deren geradliniger Verlängerung (21,41,41A-41J) gebildet wird.

22. Verfahren nach einem der Ansprüche 19-21, **dadurch gekennzeichnet, dass** das teilweise aufgetrennte Substanzgemisch (S) in eine Anzahl von flussabwärts der ersten Trennstrecke (2) hintereinander und etwa parallel zueinander und gegenüber der ersten Trennstrecke (2) um einen Winkel (a) geneigt verlaufenden weiteren Trennstrecken (4,4A-4J) injiziert wird, wo es in den jeweils angelegten elektrischen Feldern parallel weiteraufgetrennt wird.

23. Verfahren nach einem der Ansprüche 19-22, **dadurch gekennzeichnet, dass** das teilweise aufgetrennte substanzgemisch (S) in der (den) zweiten Trennstrecke(n) (4,4A-4J) in eine Richtung bewegt wird, die mit ihrer Bewegungsrichtung in der ersten Trennstrecke (2) einen Winkel (α) von etwa 30°-150°, vorzugsweise etwa 90° einschliesst.

24. Verfahren nach einem der Ansprüche 19 bie 23, **dadurch gekennzeichnet, dass** die aufgetrennten Komponenten des Substanzengemisches (S) zu einem bestimmten Zeitpunkt mit Hilfe einer Kamera optisch zweidimensional in zwei Ortskoordinaten detektiert werden.

25. Verfahren nach einem der Ansprüche 19 bis 23, **dadurch gekennzeichnet, dass** die aufgetrennten Komponenten des Substanzgemisches (S) mit einem linear scannenden optischen Detektor über Erfassung der Orts- und Zeitkoordinaten erfasst werden.

26. Verfahren nach einem der Ansprüche 22-25, **dadurch gekennzeichnet, dass** der pH-Wert des zweiten Trägermediums (E) derart beeinflussbar ist, dass das zweite Trägermedium (E) in den einzelnen Trennstrecken (4,4A-4J) jeweis einen anderen pH-Wert aufweisen, und dass sich zwischen den in benachbarten Trennkanälen enthaltenen Trägermedien (E) ein pH-Gradient einstellt.

27. Verfahren nach einem der Ansprüche 19 bis 26, **dadurch gekennzeichnet, dass** das erste Trägermedium (C) in der ersten Trennstrecke (2) verschieden von dem zweiten Trägermedium (E) gewählt wird.

28. Verfahren nach einem der Ansprüche 15 bis 21, **dadurch gekennzeichnet, dass** als Trägermedien (C,E) mobile Elektrolytlösungen oder vorzugsweise stationäre Gele gewählt werden.

## Claims

1. Device for the electrophoretic separation of complex fluid substance mixtures, comprising a channel system (21,2,22) for a carrier medium (C), an injection device (3) for the injection into the carrier medium (C) of a substance mixture (S) to be separated, and a separating path (2) for the separation of the substance mixture (S) in an electric field that can be applied in the carrier medium (C) along the separating path (2), **characterized in that** for the further separation of the substance mixture (S) there is provided at least one second separating path (4,4A-4J) having a second carrier medium (E) in which a further electric field can be applied along the second separating path (4,4A-4J), which second separating path (4,4A-4J) is inclined at an angle (α) with respect to the first separating path (2) and, downstream of and at a distance from the injection device (3) for the substance mixture (S) to be separated, extends in such a manner that a region of intersection of the first separating path (2) with the second separating path (4,4A-4J) forms a second injection device (5,5A-5J) for injecting the partially separated substance mixture (S) into the second carrier medium (E), wherein the second separating path is of continuous construction, while the point at which the first separating path enters the second separating path and the point at which it branches off from the second separating path for the removal of the mixture of the first carrier medium and the substance mixture to be separated are staggered with respect to one another along the length of the second separating path.

2. Device according to claim 1, **characterized in that** the second injection device (5,5A-5J) for the injection of the partially separated substance mixture (S) has an injection volume that is defined by its geometry.

3. Device according to claim 2, **characterized in that** the region of intersection (5,5A-5J) of the first separating path (2) with the second separating path (4,4A-4J) is in the shape of a double-T piece, the crossbars of the T pieces each being formed by the second separating path (4,4A-4J) or the rectilinear extension (41,41A-41J) thereof.

4. Device according to any preceding claim, **characterized in that** the first injection device (3) for the injection of the substance mixture (S) to be separated into the first carrier medium (C) has a geometrically defined injection volume.

5. Device according to claim 4, **characterized in that** the first injection device (3) has the shape of a double-T piece, the crossbars of the T pieces each being formed by the first separating path (2) or the rectilinear extension (21) thereof.

6. Device according to any preceding claim, **characterized in that** downstream of the first injection device (3) there is provided a number of further separating paths (4,4A-4J) for the further separation of the substance mixture (S) in an electric field applied along the respective separating path, which further separating paths are inclined at an angle (α) with respect to the first separating path (2) and are arranged approximately parallel to one another, their regions of intersection with the first separating path (2) each forming further injection devices (5,5A-5J) for injecting the partially separated substance mixture (S) into a second carrier medium (E).

7. Device according to claim 6, **characterized in that** the ends of the further separating paths (4,4A-4J) terminate in a common reservoir (44) and a common collecting vessel (45) for the second carrier medium (E) which are preferably of larger cross-section than are the separating paths.

8. Device according to claim 7, **characterized in that** the cross-section of the reservoir (44) and of the collecting vessel (45) is approximately from 2 to 10 000 times greater than the cross-section of the separating paths (4,4A-4J).

9. Device according to claim 7 or 8, **characterized in that** the reservoir (44) and the collecting vessel (45) are equipped with means that allow a pH gradient to be established in the second carrier medium (E).

10. Device according to any preceding claim, **characterized in that** the first and second carrier media (C,E) are different media.

11. Device according to any preceding claim, **characterized in that** the channel system (21,2,22), the injection devices (3,5,5A-5J), the separating paths (2,4,4A-4J) and where appropriate the reservoir (44) and the collecting Vessel (45) and any other extension channels (41,41A-41J) are made in a plate of glass, a polymer film or a semiconductive material, preferably monocrystalline silicon, which can preferably be covered with a lid, for example of glass, and **in that** separate inflow and outflow openings (11,12,42,43;11,12,46-49) are provided for the first and second carrier media (C;E) and for the substance mixture (S) to be separated, which inflow and outflow openings are arranged in the lid and/or in the plate.

12. Device according to claim 11, **characterized in that** the separating paths (2,4,4A-4J) are in the form of grooves the depth of which is from approximately 0.1 µm to approximately 1 000 µm and the width of which is from approximately 1 µm to approximately 500 µm, it always being the case that narrow grooves have a large depth and vice versa.

13. Device according to any preceding claim, **characterized in that** the carrier media (C,E) are preferably aqueous electrolytes which are transported through the channel system (21,2,22) and the separating paths (2,4,4A-4J) with the aid of electric fields.

14. Device according to any of claims 1-12, **characterized in that** the carrier media (C,E) are stationary gels.

15. Device according to any preceding claim, **characterized in that** the channel system (21,2,22) and the separating paths (2,4,4A-4J) are open on one or two sides.

16. Apparatus according to claim 14, **characterized in that** the channel system (21,2,22), the separating paths (2,4,4A-4J) and any extension channels (41,41A-41J) are constructed in the gels and open on three sides.

17. Device according to any preceding claim, **characterized in that** the angle (α) at which the second separating path (4) or the further separating paths (4,4A-4J) is(are) inclined with respect to the first separating path (2) is about 30° to 150°, preferably about 90°.

18. Device according to any preceding claim, **characterized in that** a detector is provided for the substance mixture (S) that has been separated into its components.

19. Method for the electrophoretic separation of complex fluid substance mixtures along a separating path, in which a complex substance mixture (S) is injected into the carrier medium (C) upstream of the separating path (2) and is then separated in an electric field that is applied along the separating path (2), **characterized in that** the partially separated substance mixture (S) is injected into a second carrier medium (E) downstream of the separating path (2), which second carrier medium is contained in at least a second separating path (4;4,4A-4J) which runs with an inclination at an angle (α) with respect to the first separating path (2), and **in that** the substance mixture (S) is further separated in an electric field applied in the second carrier medium (E) along the second separating path, wherein the second separating path is of continuous construction, while the point at which the first separating path enters the second separating path and the point at which it branches off from the second separating path for the removal of the mixture of the first carrier medium and the substance mixture to be separated are staggered with respect to one another along the length of the second separating path.

20. Method according to claim 19, **characterized in that** the injection of the substance mixture (S) into the first carrier medium (C) and into the second carrier medium (E) is carried out by means of injection devices (3,5,5A-5J) whose injection volumes are geometrically defined by the formation of the regions of intersection of the separating paths (2,4,4A-4J).

21. Method according to claim 20, **characterized in that** the substance mixture (S) is led for injection into the first carrier medium (C) and into the second carrier medium (E) along a double-T piece whose crossbar is in each case formed by the separating path (2,4,4A-4J) or the rectilinear extension (21,41,41A-41J) thereof.

22. Method according to any of claims 19-21, **characterized in that** the partially separated substance mixture (S) is injected into a number of further separating paths (4,4A-4J) arranged one after the other downstream of the first separating path (2) and extending approximately parallel to one another and at an angle (α) with respect to the first separating path (2), where said mixture is subjected to further separation in parallel in the respective electric fields applied.

23. Method according to any of claims 19-22, **characterized in that** the partially separated substance mixture (S) in the second separating path(s) (4,4A-4J) is moved in a direction that forms an angle (α) of about 30° to 150°, preferably about 90°, with its direction of movement in the first separating path (2).

24. Method according to any of claims 19 to 23, **characterized in that** the separated components of the substance mixture (S) are detected optically two-dimensionally in two spatial coordinates at a certain time point with the aid of a camera.

25. Method according to any of claims 19 to 23, **characterized in that** the separated components of the substance mixture (S) are detected using a linear-scanning optical detector by means of the detection of the spatial and time coordinates.

26. Method according to any of claims 22-25, **characterized in that** the pH value of the second carrier medium (E) is influencable in such a manner that the second carrier medium (E) has a different pH value in each of the individual separating paths (4,4A-4J) and **in that** a pH gradient becomes established between the carrier media (E) present in adjacent separating channels.

27. Method according to any of claims 19 to 26, **characterized in that** the first carrier medium (C) in the first separating path (2) is different from the second carrier medium (E).

28. Method according to any of claims 15 to 21, **characterized in that** the carrier media (C,E) selected are mobile electrolyte solutions or preferably stationary gels.

## Revendications

1. Dispositif pour la séparation électrophorétique de mélanges de substance fluides complexes comprenant un système de canal (21, 2, 22) pour un milieu support (C), un dispositif d'injection (3) pour l'injection d'un mélange de substance (S) à séparer dans le milieu support (C) et une section de séparation (2) pour la séparation du mélange de substance (S) dans un champ électrique, lequel peut être appliqué dans le milieu support (C) le long du tronçon de séparation (2), **caractérisé en ce que**, pour une nouvelle séparation du mélange de substance (S), il est prévu au moins un second tronçon de séparation (4, 4A-4J) avec un deuxième milieu support (E), dans lequel on peut appliquer le long du second tronçon de section (4, 4A-4J) un autre champ électrique, lequel second tronçon de séparation (4, 4A-4J) est disposé de façon inclinée d'un angle (α) par rapport au premier tronçon (2) et est agencé à une distance en aval du dispositif d'injection (3) pour le mélange de substance (S) à séparer de telle sorte qu'une zone de croisement du premier tronçon de séparation (2) et du second tronçon de séparation (4, 4A-4J) constitue un deuxième dispositif d'injection (5, 5A-5J) pour le mélange de substance (S) partiellement séparé dans le second milieu support (E), le second tronçon de séparation étant conçu de façon continue, alors que le débouché du premier tronçon de séparation dans le second et la bifurcation du deuxième tronçon de séparation pour l'évacuation du mélange constitué du premier milieu support et du mélange de substance à séparer sont disposés le long de l'étirement du second tronçon de séparation de façon décalée l'un par rapport à l'autre.

2. Dispositif selon la revendication 1, **caractérisé en ce que** le second dispositif d'injection (5, 5A-5J) pour l'injection du mélange de substance (S) partiellement séparé présente un volume d'injection qui est limité au plan géométrique.

3. Dispositif selon la revendication 2, **caractérisé en ce que** la zone de croisement (5, 5A-5J) du premier tronçon de séparation (2) avec le second tronçon de séparation (4, 4A-4J) présente la forme d'une pièce en double T, les poutres des pièces en forme de T étant constituées respectivement par le second tronçon de séparation (4, 4A-4J) ou par son prolongement rectiligne (41, 41A-41J).

4. Dispositif selon l'une quelconque des revendications précédentes, **caractérisé en ce que** le premier dispositif d'injection (3) pour l'injection du mélange de substance (S) à séparer dans le premier milieu support (C) présente un volume d'injection limité au plan géométrique.

5. Dispositif selon la revendication 4, **caractérisé en ce que** le premier dispositif d'injection (3) présente la forme d'une pièce en double T, les poutres des pièces en T étant respectivement formées par le premier tronçon de séparation (2) ou son prolongement (21) rectiligne.

6. Dispositif selon l'une quelconque des revendications précédentes, **caractérisé en ce que**, en aval du premier dispositif d'injection (3), il est prévu un certain nombre d'autres tronçons de séparation (4, 4A-4J) pour la séparation ultérieure du mélange de substance (S) dans un champ électrique appliqué le long du tronçon de séparation respectif, lesquels tronçons sont inclinés d'un angle (α) par rapport au premier tronçon de séparation (2) et sont disposés de façon à peu près parallèle les uns par rapport aux autres, et dont les zones de croisement forment avec le premier tronçon de séparation (2) respectivement d'autres dispositifs d'injection (5, 5A-5J) pour le mélange de substance (S) partiellement séparé dans un deuxième milieu support (E).

7. Dispositif selon la revendication 6, **caractérisé en ce que** les pièces d'extrémité des autres tronçons de séparation (4, 4A-4J) débouchent dans un réservoir (44) commun ou un récipient collecteur (45) commun pour le deuxième milieu support (E), qui présentent de préférence une section supérieure aux tronçons de séparation.

8. Dispositif selon la revendication 7, **caractérisé en ce que** la section du réservoir (44) ou du récipient collecteur (45) est 2 à 10.000 fois supérieure à la section des tronçons de séparation (4, 4A-4J).

9. Dispositif selon la revendication 7 ou 8, **caractérisé en ce que** le réservoir (44) et le récipient collecteur (45) sont équipés de moyens qui permettent de régler un gradient de pH dans le second milieu support (E).

10. Dispositif selon l'une quelconque des revendications précédentes, **caractérisé en ce que** le premier et le second milieu support (C, E) sont des milieux différents.

11. Dispositif selon l'une quelconque des revendications précédentes, **caractérisé en ce que** le système de canal (21, 2, 22), les dispositifs d'injection (3, 5, 5A-5J), les tronçons de séparation (2, 4, 4A-4J), éventuellement le réservoir (44) et le récipient collecteur (45) et les éventuels autres canaux de prolongement (41, 41A-41J) sont élaborés dans une plaquette de matériau à base de verre, d'un film polymère ou d'un matériau semi-conducteur, de préférence du silicium monocristallin, qui peut être recouvert de préférence avec un couvercle, par exemple en verre, et **en ce qu'**il est prévu respectivement des ouvertures séparées d'arrivée et d'évacuation (11, 12, 42, 43 ; 11, 12, 46-49) pour le premier milieu support et le second milieu support (C ; E) et pour le mélange de substance (S) à séparer, lesquelles ouvertures d'arrivée ou d'évacuation sont disposées dans le couvercle et/ou dans la plaquette de matériau.

12. Dispositif selon la revendication 12, **caractérisé en ce que** les tronçons de séparation (2, 4, 4A-4J) sont conçus comme des fossés, dont la profondeur est environ 0,1 µm jusqu'à environ 1.000 µm, et dont la largeur est d'environ 1 µm jusqu'à environ 500 µm, les fossés étroits présentant toujours une grande profondeur et inversement.

13. Dispositif selon l'une quelconque des revendications précédentes, **caractérisé en ce que** les milieux supports (C, E) sont de préférence des électrolytes aqueux, qui sont transportés à l'aide de champs électriques à travers le système de canal (21, 2, 22) et les tronçons de séparation (2, 4, 4A-4J).

14. Dispositif selon l'une quelconque des revendications 1 à 12, **caractérisé en ce que** les milieux supports (C, E) sont des gels stationnaires.

15. Dispositif selon l'une quelconque des revendications précédentes, **caractérisé en ce que** le système de canal (21, 2, 22) et les tronçons de séparation (2, 4, 4A-4J) sont conçus avec une forme ouverte sur un côté ou deux cotés.

16. Dispositif selon la revendication 14, **caractérisé en ce que** le système de canal (21, 2, 22), les tronçons de séparation (2, 4, 4A-4J) et d'éventuels canaux de prolongement (41, 41A-41J) sont réalisés dans les gels et sont ouverts sur les trois côtés.

17. Dispositif selon l'une quelconque des revendications précédentes, **caractérisé en ce que** l'angle (α), sous lequel le second (4) et les autres tronçons de séparation (4, 4A-4J) sont disposés de façon inclinée par rapport au premier tronçon (2) en formant un angle d'environ 30° à 150°, de préférence environ 90°.

18. Dispositif selon l'une quelconque des revendications précédentes, **caractérisé en ce qu'**il est prévu un détecteur pour le mélange de substance (S) séparé dans ses composants.

19. Procédé pour la séparation électrophorétique de mélanges de substance fluides complexes le long d'un tronçon de séparation, avec lequel un mélange de substance (S) complexe est injecté dans le milieu support (C) en aval du tronçon de séparation (2) et est séparé ensuite dans un champ électrique, qui est appliqué le long du tronçon de séparation (2), **caractérisé en ce que** le mélange de substance (S) partiellement séparé est injecté en aval du tronçon de séparation (2) dans un second milieu support (E), qui est contenu dans au moins un second tronçon de séparation (4 ; 4A-4J), qui est agencé de façon inclinée en formant un angle (α) par rapport au premier tronçon de séparation (2), et **en ce que** le mélange de substance (S) est à nouveau séparé dans un champ électrique régnant le long du second tronçon de séparation dans le deuxième milieu support (E), le second tronçon de séparation étant conçu de façon continue, alors que le débouché du premier tronçon de séparation dans le second et la bifurcation du deuxième tronçon de séparation pour l'évacuation du mélange constitué du premier milieu support et du mélange de substance à séparer sont disposés le long de l'étirement du second tronçon de séparation de façon décalée l'un par rapport à l'autre.

20. Procédé selon la revendication 19, **caractérisé en ce que** l'injection du mélange de substance (S) dans le premier milieu support (C) ou dans le second milieu support (E) est effectuée à l'aide de dispositifs d'injection (3, 5, 5A-5J), dont le volume d'injection est défini au plan géométrique par la conception des zones de croisement des tronçons de séparation (2, 4, 4A-4J).

21. Procédé selon la revendication 20, **caractérisé en ce que** le mélange de substance (S) pour l'injection dans le premier milieu support (C) ou dans le second milieu support (E) est guidé le long d'une pièce en double T, dont la poutre est constituée respectivement par le tronçon de séparation (2, 4, 4A-4J) ou son prolongement rectiligne (21, 41, 41A-41J).

22. Procédé selon l'une quelconque des revendications 19 - 21, **caractérisé en ce que** le mélange de substance (S) partiellement séparé est injecté dans un certain nombre d'autres tronçons de séparation (4, 4A-4J) agencés en aval du premier tronçon de séparation (2), les uns derrière les autres et de façon à peu près parallèle entre eux, et inclinés d'un angle (α) par rapport au premier tronçon de séparation (2), tronçons où la substance est séparée à nouveau en parallèle dans les champs électriques respectivement appliqués.

23. Procédé selon l'une quelconque des revendications 19 à 22, **caractérisé en ce que** le mélange de substance (S) partiellement séparé est déplacé dans le (les) second(s) tronçon(s) de séparation (4, 4A-4J) dans une direction qui forme avec son (leur) sens de déplacement dans le premier tronçon de séparation (2) un angle (α) d'environ 30° à 60°, de préférence environ 90°.

24. Procédé selon l'une quelconque des revendications 19 à 23, **caractérisé en ce que** les composants séparés du mélange de substance (S) sont détectés à un certain moment à l'aide d'une caméra de façon optique et bidimensionnelle en deux coordonnées de lieu.

25. Procédé selon l'une quelconque des revendications 19 à 23, **caractérisé en ce que** les composants séparés du mélange de substance (S) sont enregistrés avec un détecteur optique à balayage linéaire par l'enregistrement des coordonnées de lieu et de temps.

26. Procédé selon l'une quelconque des revendications 22 à 25, **caractérisé en ce que** le pH du second milieu support (E) peut être influencé de telle sorte que le second milieu support (E) présente dans les différents tronçons de séparation (4, 4A-4J) une autre valeur pH, et **en ce qu'**un gradient de pH s'établit entre les milieux supports (E) contenus dans des canaux de séparation voisins.

27. Procédé selon l'une quelconque des revendications 19 à 26, **caractérisé en ce que** le premier milieu support (C) dans le premier tronçon de séparation (2) est choisi différent du second milieu support (E).

28. Procédé selon l'une quelconque des revendications 15 à 21, **caractérisé en ce qu'**on choisit des solutions d'électrolyte mobiles ou de préférence des gels stationnaires comme milieux supports (C, E).
